# EUROPEAN PATENT APPLICATION

(11) **EP 4 764 893 A1**
(43) Date of publication of application: **24.06.2026**
(21) Application number: 24222491.3
(22) Date of filing: 20.12.2024
(51) Int. Cl.: G06F 16/435, G06N 3/045

(54) **COMPUTER-IMPLEMENTED METHOD OF GENERATING CONTENT**

(71) Applicant: Nagravision Sarl, 1033 Cheseaux-sur-Lausanne (CH)
(72) Inventor: Berkes, Pietro, Cheseuax-sur-Lausanne (CH); Marty, Renaud, Cheseuax-sur-Lausanne (CH)
(74) Representative: Parker, Andrew James

(57) **Abstract**

A computer-implemented method of generating content is provided. The method comprises: receiving, from a packages database, one or more sets of package-specific intermediate layers from one or more neural networks configured to generate content, each neural network having been trained using a respective set of training data; constructing a content generation model by combining the package-specific intermediate layers from the one or more neural networks and
connecting an output of the combined intermediate layers to one or more pretrained content generation layers; and using the content generation model to generate content.

## Description

### FIELD OF THE INVENTION

The present invention relates to a computer-implemented method of generating content, a computer-implemented method of generating a database of content packages for use in said method, and to a system for generating content from multiple content packages.

### BACKGROUND

Generative artificial intelligence (Al) models for generating content, such as images, from text are trained using a large set of training images and their corresponding text descriptions. The trained model can then be used to generate images in response to receiving a description of an image to be generated. Other combinations of input and output may be used. For example, the output may include video, audio, or text and the input may include images, video, or audio. For example, a generative AI model for generating video from audio data may be trained using a large set of training videos and their corresponding audio descriptions.

Generative AI models that are trained using training data such as images may generate content, such as images, that use components of the training data or are very similar to content of the training data. Therefore, if the training data includes restricted content such as copyrighted content or protected content, e.g., for cybersecurity purposes, then the generated content may include the restricted content. If the generation of restricted content is not desired, then any restricted content must be excluded from the training set that is used to train the generative model.

For example, a model provider may wish to include or exclude restricted data (e.g., security-sensitive data, or personal data) from the training data depending on if the generative model is to be deployed in a restricted environment or not or if a user is permitted to access the secure data. Therefore, in some scenarios different users or systems may have permission to access some content but not others. Such access may vary from user to user, from system to system, or from location to location.

Therefore, to comply with restriction, generative models need to be trained using training data which is more limited than necessary in order to accommodate each user or restriction level. This would result in less accurate and less effective content generation than if more training data were used. Alternatively, existing solutions may provide a separate generative model for each possible combination of training data, wherein each separate generative model has been separately trained on that particular combination of training data. However, such solutions require vast resources in terms of computational resource and storage in order to train and store so many models for each possible combination of training sets (i.e., equivalent to a combinatorial number of training sets).

Accordingly, there is a desire for a more computationally efficient content generation system which can ensure data security without compromising on model performance. The present invention has been devised in light of the above considerations.

### SUMMARY OF THE INVENTION

Broadly, the present invention relates to a method of generating content by constructing a content generation model using a selection of pretrained package-specific assembly layers which have been trained using specific packages of training data. The constructed model is then used to generate content utilising content of each specific package without needing to train an entirely new model based on said packages.

Accordingly, in a first aspect, embodiments of the present invention provide a computer-implemented method of generating content, the method comprising: receiving, from a packages database, one or more sets of package-specific intermediate layers from one or more neural networks configured to generate content, each neural network having been trained using a respective set of training data, constructing a content generation model by combining the package-specific intermediate layers from the one or more neural networks and connecting an output of the combined intermediate layers to one or more pretrained content generation layers, and using the content generation model to generate content.

Advantageously, by constructing the content generation model in this way, a bespoke model may be constructed according to any combination of packages available, without needing to retrain the model or store trained models for every potential combination of packages that might be requested. In this way, the content generation model is able to utilise information in each of the available sets of training data to generate the content, thus improving performance of the model compared to generic models which cannot used such data. Moreover, by receiving and using pretrained neural network layers from the packages network, rather than the training sets themselves, the model is able to benefit from the information in the training data without needing to access the data itself. Thus, less memory and communication resources is required in order for the content generation model to benefit from those training sets.

The content may be media content e.g., for displaying on a screen. For example, the content may include text, an image, or video (comprising images frames and/or audio). Accordingly, the computer-implemented method may be a method of generating an image, the training data may be training images, the one or more neural networks may be neural networks configured to generate images, and the content generation model may be an image generation model.

Each training set may be (or form part of) a package. A package may therefore be understood to be a collection or library of training data which may be enabled or disabled for use by the content generation model. For example, each package may be owned and controlled by a respective proprietor who may, for example, own the copyright for the data in that package or controls security permissions for that content.

Each neural network may have been partially trained (e.g., fine-tuned) using the respective set of training data. For example, a pre-trained neural network, which may have been originally trained on an initial training set, may be fine-tuned (e.g., using transfer learning) using the respective set of training data.

The package-specific intermediate layers for use in the content generation model may be generated, extracted, and provided by the respective proprietor of each package.

The method may comprise displaying the generated content (e.g., an image), providing the generated content (e.g., to a user), and/or uploading the generated content to a target location. For example, the generated content may be uploaded to a website or social media platform.

The computer-implemented method may be performed by a content generation module located, for example, on a user device or on a remote server. For example, the computer-implemented method may be performed by an application hosted on a user device, or a function of a social media platform or remote server which is accessible from a user device. The packages database may be located with or form part of the content generation module. Alternatively, the packages database may be located remotely from and in communication with the content generation module.

The packages database may include associations between one or more packages and respective sets of package-specific intermediate layers for each package. For example, the method may include sending a package request to the packages database indicating one or more packages to be used in content generation. Responsive to receiving the package request, the packages database may transmit one or more sets of package-specific intermediate layers which correspond to the indicated packages (e.g., to be executed centrally/locally). Alternatively, the packages database may transmit a location of the package-specific intermediate layers which may then be retrieved from said location. For example, each set of package-specific intermediate layers may be located on a package-specific server operated by a proprietor of the respective package.

In a further example, the package-specific intermediate layers may be hosted remotely (e.g., in the packages database, or in a location indicated in the packaged-database). The package-specific intermediate layers may be executed remotely. Therefore, in this example, the constructed content generation model may be a distributed model, wherein the package-specific intermediate layers are hosted and executed remotely. Each set of package-specific intermediate layers may be executed remotely to generate a respective output which is transmitted to a central processor for combining and providing to the pretrained content generation layers.

The method may comprise providing a prompt to the content generation model so as to generate the content. For example, when each of the package-specific intermediate layers are hosted remotely, the prompt method may comprise transmitting the prompt to each set of package-specific intermediate layers, which then return a respective output for combining. The prompt may be a text prompt. However, other examples of prompt may be used such as a random number vector, an image, or an audio sample. The method may comprise, first, receiving the prompt and then receiving a selection of the package-specific-intermediate layers. For example, the prompt may be received from a user via a user interface.

A plurality of sets of package-specific intermediate layers from a respective plurality of neural networks configured to generate content may be received from the packages database. Accordingly, the resulting content generation model may advantageously benefit from information included in multiple packages of training data.

The package-specific intermediate layers may be assembly layers (e.g., decoder layers) of the package-specific neural networks. For example, the intermediate layers may be a number of layers of the package-specific neural networks which are configured (during training) to receive content embedding information (e.g., a latent vector) and determine content and/or style information. For example, when the content includes images, the intermediate layers may be configured (e.g., during the training/fine-tuning process) to determine line, shape, texture, style, and/or colour information.

The package-specific intermediate layers may be derived from any suitable model for learning feature information from content (e.g., images) such as auto encoders, diffusion models, transformer models, etc. The number of number of layers of the package-specific neural networks which are extracted intermediate layers may be dependent on the type and size of model. For example, number of layers per package may be extracted which is sufficient for the layers to learn new content. The intermediate layers may extend from a top layer (e.g., an input embedding layer) to an intermediate layer which is less detailed than a layer for specifically determining pixel content yet not so generic that it might be package-specific. Accordingly, when a neural network is trained (i.e., fine-tuned) for each content package a top portion of the number of layers of that neural network may be extracted as the package-specific intermediate later. The number of layers may depend on (and be configured based on) the type and size of the neural network.

The combining of the package-specific intermediate layers may comprise concatenating outputs of the package-specific intermediate layers. For example, an output vector from each package-specific intermediate layer may be concatenated with the output vectors of the other package-specific intermediate layers to form a combined output vector. The combined output vector may then comprise content style information from each of the selected packages associated with the package-specific intermediate layers used to construct the content generation model.

Constructing the content generation model (e.g., a combined model) may comprise providing the concatenated outputs to the one or more pretrained content generation layers. The one or more pretrained content generation layers may be derived from a pretrained neural network which is configured to generate content from combined sets of intermediate layers (e.g., from the concatenated outputs of one or more sets of intermediate layers).

The method may comprise selecting pretrained content generation layers from a plurality of sets of pretrained content generation layers. Each set of pretrained content generation layers may be trained to generate content from a different number of combined sets of intermediate layers. Accordingly, the content generation model may be configured to accommodate an adjustable quantity of packages (irrespective of which packages the adjustable quantity includes), without needing to be retrained to accommodate every possible (e.g., combinatorial) combination of packages.

The pretrained content generation layers may be trained using freely available training data. For example, training data not associated with the packages database. Accordingly, the pretrained content generation layers may be package agnostic thereby removing any risk of the pretrained content generation layers generating restricted content and enabling the same sets of pretrained content generation layers to be used for each quantity of selected packages, irrespective of the particular packages that have been selected.

The pretrained content generation layers may be content generation layers from an initial, main neural network. The main neural network may be any suitable generative architecture for generating content such as images. The package-specific intermediate layers may be, or be extracted from, a copy of the same, main neural network as the pretrained content generation layers and fine-tuned (e.g., subject to additional training) using a respective training set to be package-specific.

Constructing the content generation model may further comprise: receiving one or more layers of an initial neural network (e.g., the main neural network) which are configured to receive a prompt and generate content embedding data. The one or more layers of the initial neural network may then be connected to the combined package-specific intermediate layers so as to provide the content embedding data as inputs to the combined package-specific intermediate layers. In this context, connecting neural network layers may be understood to mean that, in use, output data received from a first set of layers (e.g., of one network) may be provided as inputs, to a second set of layers (e.g., of another network).

As mentioned above the prompt, may be a text prompt. A text prompt may comprise a series of words or instructions requesting or describing particular content or features to be generated.

The content embedding data may be understood to mean a numerical representation of the content which is a lower numerical resolution than the original content. The content embedding data may, therefore, be referred to as a representation or latent vector.

The initial (e.g., main) neural network may be an encoder-decoder. The layers used to generate content embedding data for the content generation model may include one or more layers of the encoder. For example, the content embedding data may then be a latent vector generated by an intermediate layer of the initial neural network (e.g., by the encoder). That latent vector may then be provided to subsequent intermediate layers of, optionally, the same initial neural network which have been trained (i.e., fine-tuned) using a respective data set to be the package-specific intermediate layers.

The package-specific intermediate layers may be formed from one or more layers of the decoder of the same initial neural network. That is, the one or more layers of the initial neural network and the package-specific intermediate layers form part of a same neural network having been trained using an initial set of training data (e.g., freely available training data) to receive a prompt and generate content based on the prompt. A copy of the initial neural network may then be additionally trained using training data in a specific package so as to update the decoder. The package-specific intermediate layers may then be extracted from the updated decoder.

The computer-implemented method may further comprise: receiving a selection indicating at least one package to include in the content generation. For example, a packages list may be received comprising a selection of at least one set of the package-specific intermediate layers from the packages database. Receiving the package-specific intermediate layers from the packages database may then comprise receiving the selected sets package-specific intermediate layers that are defined in the packages list (e.g., corresponding to the selected packages).

The package list may include identifiers of one or more sets of training data. The method may then include requesting, from the packages database, the one or more sets of package-specific intermediate layers from the neural networks which were trained using the identified sets of training data in the packages list.

The selected packages may be selected in addition to a default package (e.g., a freely accessible package). Therefore, in these examples, combining the package-specific intermediate layers from the one or more neural networks may further comprise combining the package-specific intermediate layers with intermediate layers corresponding to a default package (e.g., trained using a default/freely available training set). The intermediate layers corresponding to the default package may be intermediate layers extracted from (the decoder of) the initial neural network.

The selected packages (in the packages list) may be determined based on any one or more of: access permissions data, a user selection, a location of a website, system or user, territorial permissions, relevance of the packages to a particular task, etc

For example, the package list may be determined based on: access permissions data associated with a user, and/or territorial permissions associated with a location of the user. In some examples, the packages list may be determined from user profile settings. For example, user profile settings associated with a target location for uploading the generated content may indicate which packages the user is permitted to use in that target location. The method may therefore comprise receiving the user profile settings and generating the packages list based on the user profile settings.

The computer-implemented method may further comprise presenting a list of available packages identified in the access permissions data to a user, and receiving a user selection of packages from the list of available packages.

In further examples, the packages list may be received from a user interface. For example, the computer implemented method may comprise receiving a user input selecting one or more of the sets of package-specific intermediate layers for retrieval from the packages database.

In further examples, the computer-implemented method may comprise receiving a prompt (e.g., a text prompt) for initialising the content generation model, and determining the packages list based on the prompt. For example, the packages list may be determined by providing the prompt to a pretrained model configured to analyse the prompt and identify one or more relevant packages associated with that prompt. Alternatively, a classifier may be provided for each package in the packages database (or each package which is determined to be available based on the access permissions database), each classifier being configured to output a probability that the respective package is relevant to the prompt. Constructing the content generation model may then comprise using the package-specific intermediate layers corresponding to the most relevant packages (e.g., a predetermined number of the most relevant packages), or corresponding to packages wherein the probability is higher than a predetermined threshold. In other examples, determining the packages list may comprise identifying one or more keywords in the prompt and comparing the one or more keywords to a list of keywords associated with each package so as to identify packages relevant to the prompt.

When the packages list is determined based on a user input or prompt, the computer-implemented method may further comprise determining a generation mode for the content by comparing the packages list to access permissions data to determine if the packages in the packages list are available. The determined generation mode may be a restricted generation mode when the packages in the packages list are determined to be available, or an unrestricted generation mode when the packages in the packages list are determined to be not available. For example, when the access permissions data indicates that each of the packages in the packages list are available (e.g., to a user) then the unrestricted generation mode may be activated. However, when the access permissions data indicates that any of the packages in the packages list are not available then the restricted generation mode may be activated.

When the generation mode is restricted, the method may comprise removing unavailable packages (e.g., packages not identified in the access permissions data) from the packages list. Thus, receiving the package-specific intermediate layers from the packages database may comprise receiving the package-specific intermediate layers which are associated with the available packages in the updated packages list for constructing the content generation model. Accordingly, the generated content may be restricted to only include information from the available packages.

When the generation mode is determined to be restricted, the method may comprise providing an alert such as: a user notification, a signal provided to a proprietor of an unavailable package, a watermark, etc. In some examples, the generated content may be restricted from being displayed or distributed. In some examples, the restricted generation mode may be used to prevent display of the generated content or cause the editing of the generated content. The generation mode may therefore be referred to as a display mode.

In other examples, when the generation mode is restricted, the content generation model may be locked so as to prevent its use to generate content. Therefore, the content generation model may only be used to generate content if the packages used to generate the content have been made available or unlocked (e.g., through payment or by providing a security token etc).

As mentioned above, the computer-implemented method may comprise editing the generated content when the determined generation mode is restricted. The edited content may then be displayed, uploaded to a target location, or otherwise distributed. The method may comprise displaying or otherwise providing an obscured version of the generated content when the display mode is restricted. Therefore, generating the content (in an unedited form) may be performed only if the generation mode is unrestricted.

For example, the generated content may include an image and editing the content may then comprise embedding a watermark in the image, obscuring the image, or reducing a resolution of the image. For example, the edited version of the image, may be a low resolution version of the image. In this way, any restricted content, such as copyrighted content or security-sensitive content, in the generated image may be protected.

The computer-implemented method may further comprise, when the generation mode is restricted, requesting a payment from a user. Responsive to receiving a payment, the generation mode may be updated to the unrestricted generation mode. The content generation model and generated content may then be updated accordingly.

As mentioned above, the package-specific intermediate layers may be generated by training package-specific neural networks for generating content using specific sets of training data (e.g., from selected packages). The package-specific intermediate layers may be stored in a packages database for later use by a content generation model.

Accordingly, in a second aspect, there is provided a computer-implemented method of constructing a packages database for use in any preceding claim, the packages database comprising one or more sets of package-specific intermediate layers from one or more package-specific neural networks configured to generate content, the method comprising:
receiving one or more sets of training data, using each of the one or more sets of training images to train a respective package-specific neural network, each package-specific neural network being configured to receive a prompt and generate content, extracting a set of one or more intermediate layers from each trained package-specific neural network, and storing each set of intermediate layers in the packages database.

The training of each respective package-specific neural network may comprise: receiving a pretrained content generation model which is configured to receive a prompt and generate content, and using each set of training data to perform transfer learning on the pretrained model so as to generate each respective package-specific neural network. Accordingly, the top layers of each pretrained model may be updated using the training data from a specific package to generate content from that package.

The computer-implemented method may further comprise generating association data linking each set of package-specific intermediate layers and the set of training data used to train those intermediate layers. The association data may then be stored in the packages database. For example, the association data may include a first training set identifier identifying a first set of training data, a model identifier identifying a first set of package-specific intermediate layers (or a location of the package-specific intermediate layers e.g., in memory), and an indication that the first training set identifier and the first model identifier are associated with each other. Therefore, the packages database may be used to look-up a training set (using a training set identifier) and retrieve a model identifier (or a location) for a set of intermediate layers associated with that training set.

In a third aspect, there is provided a computer-implemented method of generating pretrained content generation layers for use in a content generation model, the method comprising: receiving content embedding layers forming at least part of a pretrained neural network configured to receive content and generate content embedding information, providing training data to one or more copies of the image embedding layers to generate content embedding information for each copy of the content embedding layers, combining the content embedding information, training content generation layers to generate content from the combined image embedding information, storing the trained content generation layers for use in combining package-specific content embedding information. The pretrained content generation layers for use in construction the content generation model of the first aspect.

The method may comprise training a general content generation model to receive a prompt, generate embedding information, and generate content based on the embedding information. The initial neural network for generating the content embedding information may be formed of initial (encoder) layers of the general content generation model and the content generation layers may be formed of final (decoder) layers of the general content generation model. Accordingly, constructing the content generation model of the first aspect may comprise replacing intermediate layers of the general content generation model with the combined package-specific intermediate layers.

In a fourth aspect, there is provided a system for performing the method of the first or second aspects. For example, there is provided a system for generating content (e.g., images), the system comprising: a generative model constructor configured to construct a content-generation model for generating content by: receiving the package-specific intermediate layers from a packages database, combining the received package-specific intermediate layers, and connecting an output of the combined package-specific intermediate layers to one or more pretrained content generation layers, and a content generator configured to use the content generation model to generate content.

The system may comprise the packages database. The packages database may comprise a plurality of sets of package-specific intermediate layers from a plurality of neural networks for generating content, each neural network having been trained using a respective set of training data.

Additional aspects of the invention may relate to systems configured to execute the computer-implemented method of any one of the first, second, or third, aspects of the invention. Specifically, the system may comprise a processor which is configured to execute the respective computer-implemented methods of the first, second, and third, aspects of the invention.

Additional aspects of the invention may provide a computer program comprising instructions which, when the program is executed by a computer, cause the computer to carry out the steps of a computer-implemented method of any one of the first, second, and third aspects of the present invention. Further aspects of the invention may provide a computer-readable storage medium, having stored thereon, the computer program of the previous aspects of the invention.

The invention includes the combination of the aspects and preferred features described except where such a combination is clearly impermissible or expressly avoided.

### SUMMARY OF THE FIGURES

Embodiments and experiments illustrating the principles of the invention will now be discussed with reference to the accompanying figures in which:
- **Fig. 1** shows a diagram of a system for generating content;
- **Fig. 2** shows a flowchart of a method for generating content;
- **Fig. 3** shows a diagram of an image generation AI model;
- **Fig. 4** shows a more detailed diagram of an image generation AI model;
- **Fig. 5** shows a diagram of package-specific intermediate layers for a plurality of packages;
- **Fig. 6** shows a diagram of a process for training pretrained image generation layers;
- **Fig. 7** shows a diagram content generation AI model combining multiple packages;
- **Fig. 8** shows another diagram of content generation AI model with additional text processing layers;
- **Fig. 9** shows a diagram of a content generation AI model in use;
- **Fig. 10** shows a flowchart of another method for generating content; and
- **Fig. 11** shows a flowchart of another method for generating content.

### DETAILED DESCRIPTION OF THE INVENTION

Aspects and embodiments of the present invention will now be discussed with reference to the accompanying figures. Further aspects and embodiments will be apparent to those skilled in the art. All documents mentioned in this text are incorporated herein by reference.

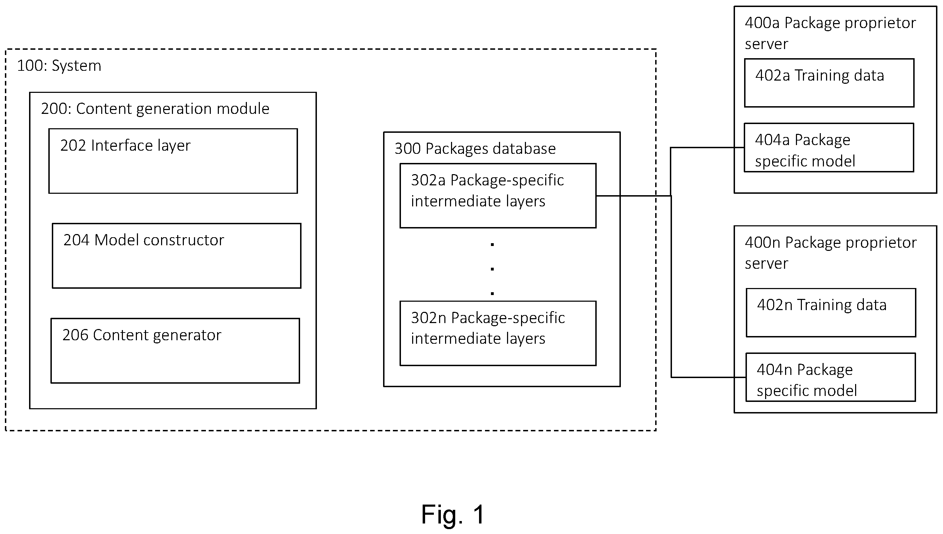

Fig. 1 shows a diagram of a system 100 for generating content such as images, video, or text. The system 100 comprises a content generation module 200 for constructing an AI model to generate content, and a packages database 300 comprising one or more sets of package-specific intermediate layers 302n for constructing the AI model. The content generation module 200 and the packages database 300 may be located, for example, on a shared server or computing device. Alternatively, they may be located on separate servers and communicatively coupled e.g., via the internet.

Herein, the term "module" is used to refer to a functional module which is configured or adapted to execute a particular function. The modules may be implemented in hardware (i.e. they may be separate physical components within a computer), in software (i.e. they may represent separate sections of code, which when executed by a processor, cause the processor to perform a particular function), or in a combination of both.

The packages database 300 contains a plurality of sets of package-specific intermediate layers 302n extracted from respective neural networks 404n for generating content. Each neural network 404n is a package-specific neural network having been fine-tuned using a respective set of training data 402n (i.e., a package). The training data 402n in each package may be, for example, copyrighted or restricted content which has restricted use and so is available to only some users or in some territories for cybersecurity purposes or to prevent copyright infringement etc.

In Fig. 1, the packages database 300 is shown in communication with package proprietor servers 400a -400n, each package proprietor server comprising a set of training data 402n and a package-specific model 404a (e.g., a generative neural network). Proprietors, or any other suitable data processing body with access to a training set 402n, using the training set 402n to train (e.g., via transfer learning) a generic content generation model so as to generate a package-specific model 404a which is configured to generate content based on the particular training data 402a in that package. For example, the package-specific model may be trained using training images and descriptions of those images to receive a prompt and generate an image based on the prompt. After training, one or more assembling layers are then extracted from the package-specific model 404a and provided to the packages database 300. The package-specific intermediate layers 302a in the packages database 300 can then be updated by the proprietors of the packages, for example, as more data is appended to the training sets 402n or as the package-specific model 404n is fine-tuned.

The content generation module 200 comprises an interface layer 202 for receiving a prompt and, optionally, a selection of packages to use, a model constructor 204 configured to construct a content-generation model for generating content, and a content generator 206 which is configured to provide the prompt from the interface layer 202 to the constructed model to generate content based on the prompt. The interface layer 202 may be connected, for example, to a user interface or third party software from which instructions for running the content generation module 200 are received, wherein the instructions include the prompt and/or the selected packages.

As explained in detail below, the model constructor 240 is configured to construct the content generation model by receiving one or more sets of package-specific intermediate layers 302n from the packages database 300, combining the received package-specific intermediate layers 302n, and connecting an output of the combined package-specific intermediate layers to one or more pretrained content generation layers. Accordingly, the generated content may be generated based on information contained in each of the packages used in the model, via the package-specific intermediate layers 302n received from the packages database 300, without needing to train an entirely new model to use the selected packages.

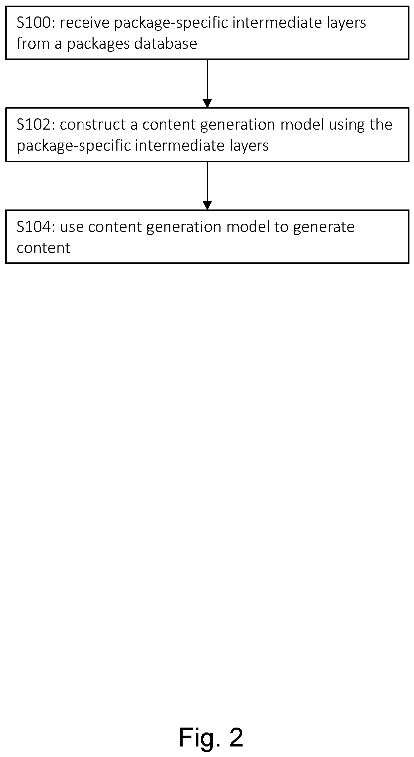

Fig. 2 shows a flow diagram of a method for generating content using the system of Fig. 1.

In step S100, the model constructor 204 receives one or more sets of package-specific intermediate layers 302n (or remote locations of the package-specific intermediate layers 302n) from the packages database 300. As discussed below in relation to Figs., 8 and 9, the model constructor 204 may be configured to request or retrieve a selection of the sets of package-specific intermediate layers 302n based on access permissions data setting out which packages are available for use, a user selection of packages, and/or a determination of which packages are most relevant to a particular prompt used to initialise the model.

The selection of package-specific intermediate layers 302n may be performed, for example, each time a user wishes to generate content, once for a particular user or system, or each time a user specifies an upgrade of available packages. For example, a model upgrade with new packages may be triggered when a user requests content which is restricted and provides data confirming they have access rights to that content.

In step S102, the model constructor 204 combines the received sets of package-specific intermediate layers 302n and one or more (package-agnostic) pretrained content generation layers to construct a content generation model based on each of the selected packages. The model constructor 204 may also append one or more pretrained initial neural-network layers (e.g., encoder layers) to the combined sets of intermediate layers, the initial neural-network layers being configured to process a prompt and generate a latent vector for providing to each of the sets of intermediate layers 302n.

The package-specific intermediate layers 302n may each be hosted and executed remotely in different remote locations. Accordingly, the content generation model, in this example, is a distributed content generation model. Each set of package-specific intermediate layers 302n is provided an input (e.g., from the one or more pretrained initial neural-network layers) and executed separately. The package-specific intermediate layers 302n are then combined by concatenating the outputs of each set of package-specific intermediate layers 302n. The concatenated outputs are provided to the pretrained content generation layers (hosted remotely or centrally) to generate content model based on each of the selected packages.

Finally, in step S104, the content generator 204 is configured to provide a prompt to constructed content generation model in order to generate content such as an image or text. The resulting content is therefore generated based on the prompt and on each of the selected packages used to construct the model. The prompt may be received from a user interface as mentioned above. However, the prompt may also be an automatically generated prompt such as a random number or a seed image so as to generate random content based on the selected packages.

The following figures show diagrams illustrating how the content generation model is constructed.

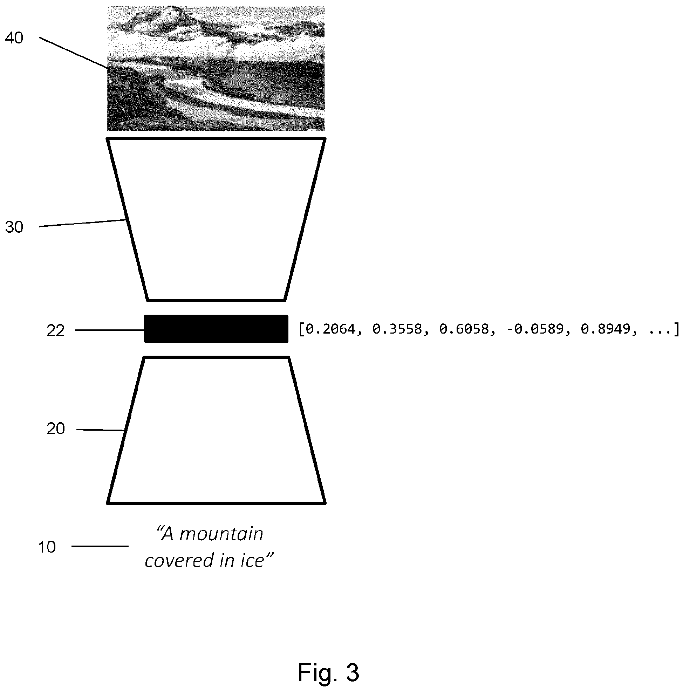

Fig. 3 shows a diagram of a content generation model (i.e., a generative neural network) which is configured to receive a prompt and generate content. In this example, the content generation model is configured to receive a text prompt 10 comprising a series of word requesting certain content (e.g., "a mountain covered in ice"), and output an image 40.

The content generation model shown in Fig. 3 (whose structure may be used for each of the content generation models discussed herein) is based on a variational autoencoder architecture, such as those used in in Stable Diffusion¹ and DALL-E². The model comprises a text processing network 20 (e.g., an encoder) for converting the text prompt 10 into a text embedding 22 (e.g., a numerical latent vector), and a content generating network 30 (e.g., a decoder) for generating content (e.g., the image 40) from the text embedding 22.

This model may be trained using freely available training data comprising text descriptions and images. However, if a user wishes to include additional packages of training data, then according to traditional methods, the neural network would need to be retrained using the additional packages which is time consuming and requires access to the additional training data. The present methods provide a means, instead, to fine-tune the decoder portion of the model to account for the additional packages without retraining the entire model.

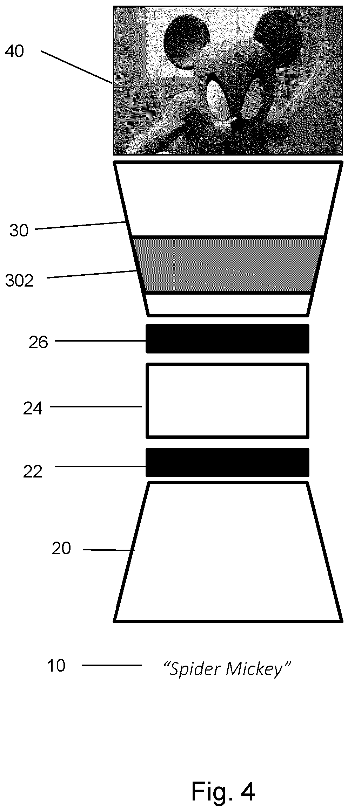

Fig. 4 shows a more detailed diagram of a content generation model for generating an image 40 based on a text prompt 10. The model comprises a text processing network 20 for generating text embedding data 22 from the text prompt, text-to-image embedding conversion layers 24 for generating image embedding data 26 based on the text embedding data 22, and an image
¹ https://en.wikipedia.org/wiki/Stable_Diffusion#Technology
² https://medium.com/@zaiinn440/how-openais-dall-e-works-da24ac6c12fa generation network 30 for generating an image 40 using the image embedding data 26. The image generation network 30 comprises intermediate layers 302 which are responsible for transforming abstract concepts (e.g., represented as a latent vector) into a content and style sketch for the image 40.

By using the present methods, content holders (e.g., package proprietors, copyright holders, or data security agents) can prevent generative AI model providers from using their content for training. Rather, providers of the generative AI model allow content holders to fine-tune the top layers of the generative model, themselves, using their content so as to generate a package-specific image generation network 30. The content providers can then provide the fine-tuned intermediate layers 302 to the generative AI model provider to combine the embeddings from 1 - N different packages. As a result, providers of the AI model need not have access to restricted content to training the model, and the model itself can be prevented from generating restricted content (by constructing a bespoke generative model for each use-case, which incorporates only the packages which are allowed for that use-case).

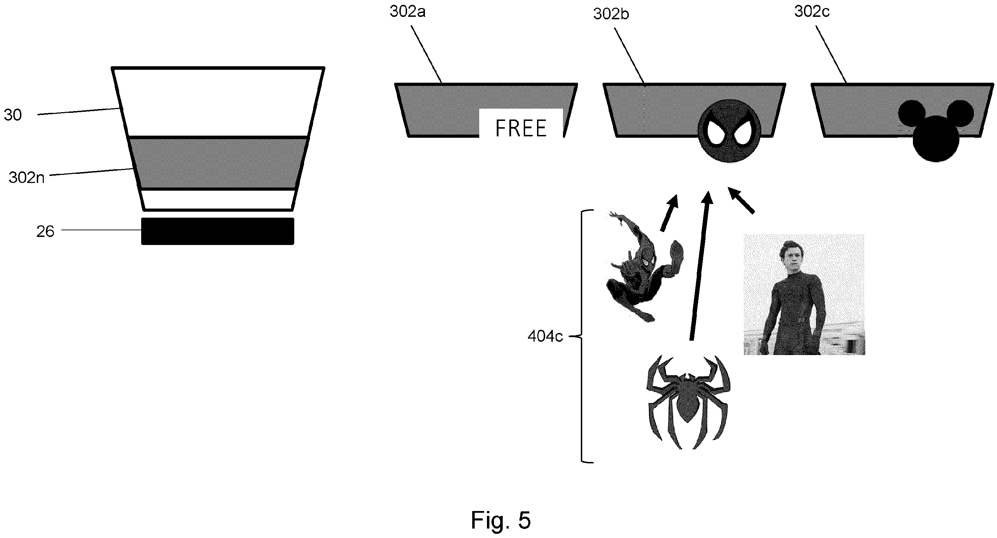

This concept is illustrated in Fig. 5. To generate package-specific intermediate layers 302n for each package (comprising a respective set of training data 403n), a copy of the generic generation model (trained using freely available data) as shown in Fig. 3 is created, and the top layers comprising the image embedding 26, and image generation network 30 are fine-tuned using the training data 402n in the specific package (e.g., copyrighted, personal data, or security-sensitive content). In this example, the fine-tuning is performed using pairs of text-prompts and images in the respective training set 404n in the same way that the generic generation model was trained.

Next, one or more intermediate layers 302n related to the generation of content and style in the image are extracted. The intermediate layers 302n are then transmitted to a packages database 300 for later use, thus avoiding a need to transmit the training data 402n itself.

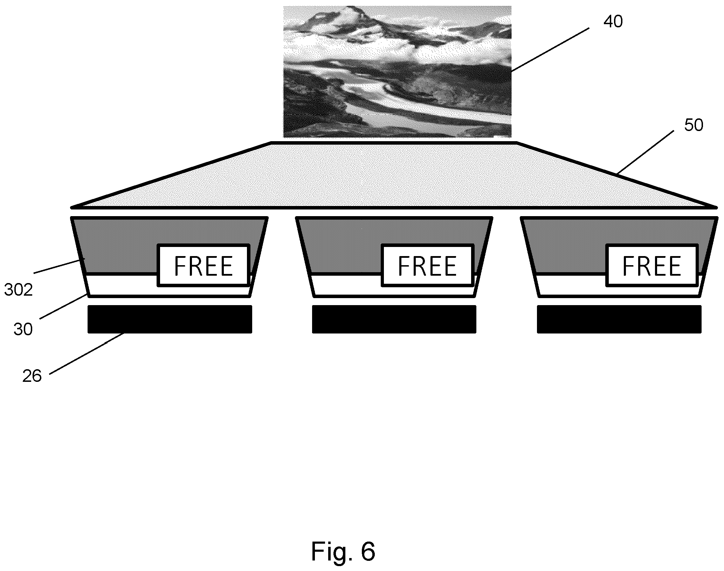

Fig. 6 shows a diagram of a generative model comprising intermediate layers 302n from multiple packages. To combine one or more selected sets of intermediate layers 302n, an additional network comprising pretrained image generation layers 50 is appended to each of the sets of package-specific intermediate layers 302n.

The pretrained image generation layers 50 themselves are trained using freely available or unlicensed data as shown in Fig. 6. The pretrained image generation layers 50 are therefore package agnostic (i.e., the pretrained image generation layers 50 may be provided any packages as inputs). They are trained to receive latent vectors (e.g., embeddings) which are output from multiple sets of intermediate layers so as to generate content based on each of the sets of intermediate layers. Several versions of pretrained image generation layers may be trained to receive a different number of latent vectors from a corresponding number of sets of intermediate layers. Therefore, different numbers of packages may be used to generate the content, without needing to train image generation layers 50 for every possible combination of packages (since the pretrained image generation layers are package agnostic). After training, the pretrained image generation layers are used to generate content from one or more sets of intermediate layers 302n from the packages database 300 which correspond to different packages.

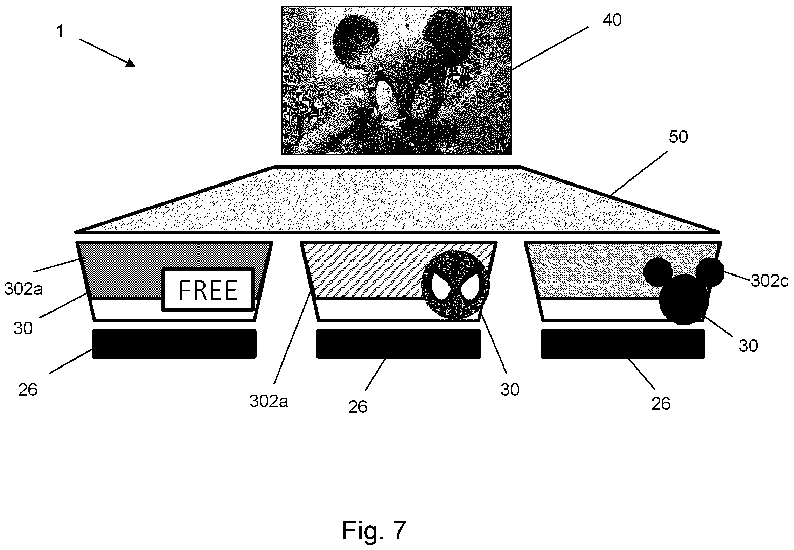

Fig. 7 shows a diagram of a constructed content generation model 1 comprising a plurality of sets of intermediate layers 302a-c from three different packages (including a freely available package) and pretrained image generation layers 50 for generating an image.

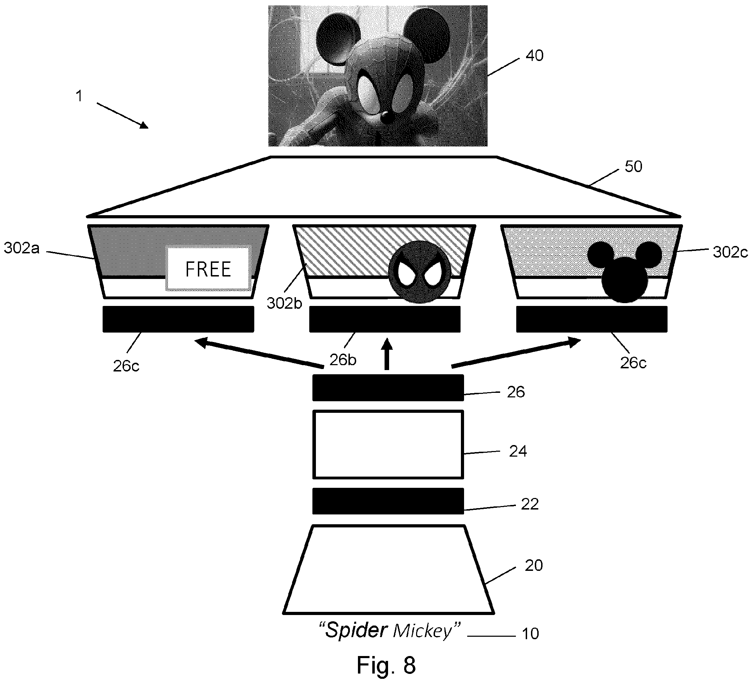

As shown in Fig. 8, the constructed content generation model 1 also comprises an initial network configured to receive a text prompt 10 and generate the image embedding data 26 for input to the image generation layers. As described above for Fig.4, the initial network comprises a text processing network 20 for generating text embedding data 22 from a text prompt 10, and one or more text-to-image embedding conversion layers 24 for generating image embedding data 26 based on the text embedding 26. The resulting image embedding data 26 is duplicated and provided to each of the sets of package-specific intermediate layers 302n for conversion into image and content sketches, and subsequent combining by the image generation layers 50.

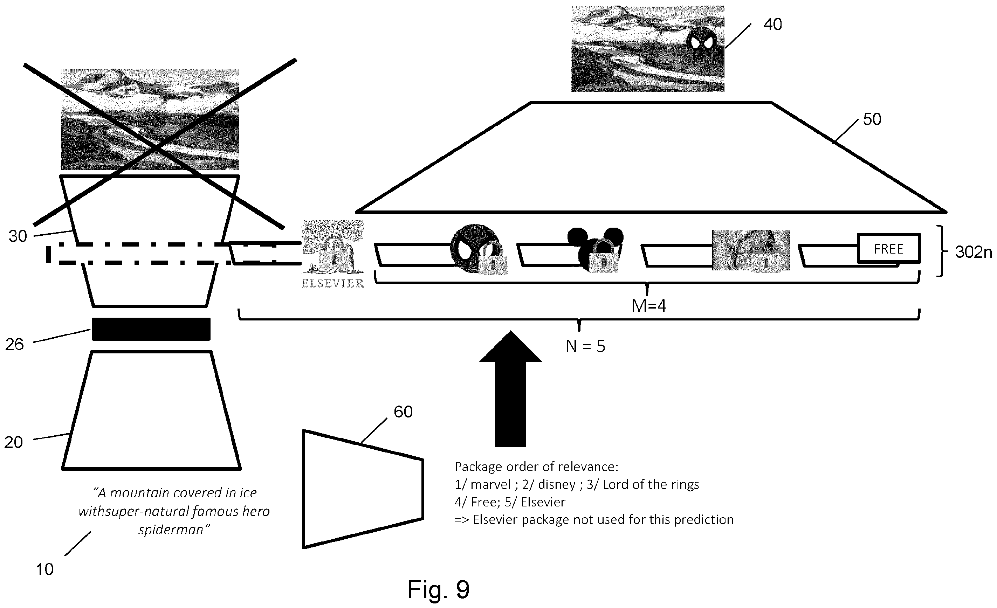

Fig. 9 shows a diagram of a combined model 1 being constructed for generating content. First a text prompt 10 is received, for example, from an interface layer 202. The prompt 10 is provided to a text processing network 20 and embedding conversion layers, as discussed above, to generate image embedding data 26.

A plurality of N sets of package-specific intermediate layers 302a-e are available for processing the prompt 10. A selection, M, of the available packages is received and used to generate an image 40 based on the text prompt 10. In this example, the prompt 10 is provided to an additional network 70 which is configured to classify each of the available packages as relevant or not to the particular text prompt 10. In Fig. 9, four of the five packages are selected as relevant (i.e., N-5, M = 4). The image embedding data 26 then is provided to each of the four selected package-specific intermediate layers 302n, the outputs of which are provided to pretrained image generation layers 50 to generate an image 50 based on the outputs from each of the selected package-specific intermediate layers 302n.

As mentioned above, the M packages used in the final content generation model may be selected according to which packages are available to a particular user or system (e.g., based on copyright or personal data permissions). Further, the selection of available packages, M, may be a user selection of available packages wherein a user manually selects which packages they want to use. In other examples, M may be determined based on the output of a classifier which is configured to select relevant packages for a particular task or prompt 10 (as shown in Fig. 9). In some examples, the number of selected packages, M, may be fixed, (e.g., 4) and the most relevant M packages for a task may be selected (e.g., by a user or by a classifier model). For example, a package may include images related to health care such as scans or x-rays. However, health care data such as this may be subject to security provisions for data protection laws and so may only be accessible to bodies who are permitted to access it.

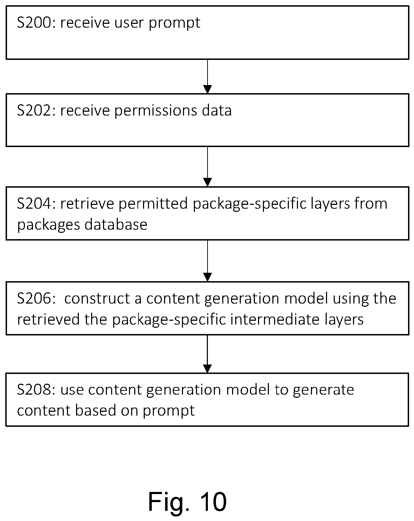

Fig. 10 shows a flow diagram of an example method of generating content wherein packages are selected based on access permissions data.

In step S200 a user prompt is received for initializing the content generation model. This may be a text prompt comprising a description of content to be generated. However, the prompt could also be an image or audio.

Next, in step S202 access permissions data is received, for example, from a user profile or from a database setting out access permissions for different users or territories etc. The access permissions data contains an indication of which packages are available to the user and/or permitted to be used. For example, this may be a list of copyright or security protected packages which a user of the system has paid for or been granted access to. Steps S200 and S202 may be performed in the opposite order to that shown in Fig. 10, or in parallel.

Next, in step S204 the model constructor 204 retrieves or requests the package-specific intermediate layers corresponding to the permitted packages identified in the access permissions data. Then, in step S206, the model constructor constructs a generative model using the package-specific intermediate layers as discussed above.

Steps S204 and S206 may be performed when access permissions data, associated with a user or system, has determined to have changed. Accordingly, a constructed generated model (or configuration information relating to the constructed generated model) may be stored and linked to a user or system profile. In other examples, the generative model may be implemented (and executed) on-the-fly each time it is needed. This method particularly relevant for examples where the package-specific intermediate layers are hosted remotely such that the constructed generated model is a distributed model combining the outputs of intermediate layers from several remote locations.

Finally, in step S208, the user input prompt is provided to the constructed generative model in order to generate content such as an image.

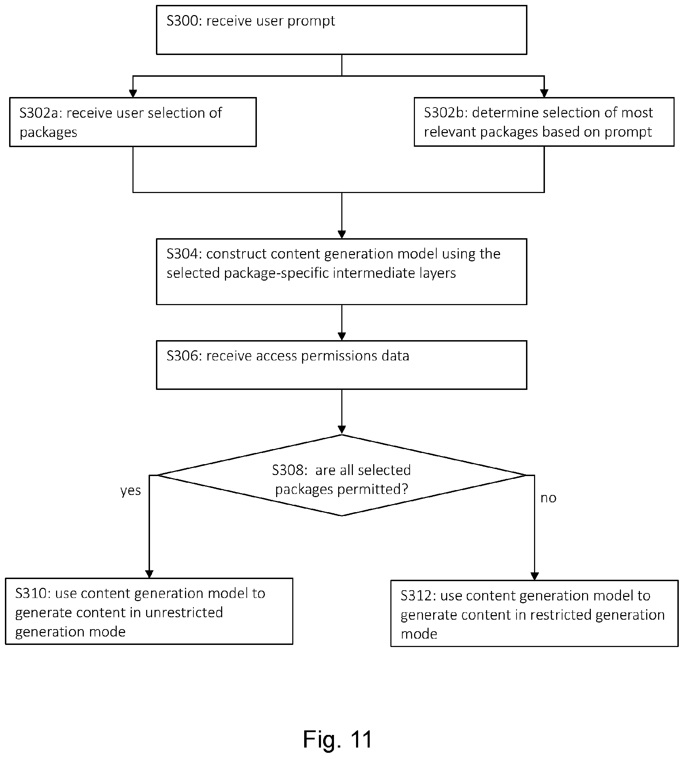

Fig. 11 shows a flow diagram of another example method of generating content wherein packages are selected (prior to consulting the access permissions data) based on a user selection of packages and/or based on each package's relevance to the present task.

First, in step S300 a user prompt is received for initializing the content generation model. Next, a selection of packages to use in the content generation model is determined. In one implementation, see step S302a, a user selection of packages is received, for example, from the interface layer 202.

In another implementation, see step S302b, a selection of the most relevant packages is determined based on the user prompt. For example, a classifier for each package may be used to provide a probability of each package being relevant to the prompt. A selection of the most relevant packages (e.g., the most relevant four packages) may then be used to construct the content generation model. Alternatively, all packages with a probability higher than a threshold probability may be used to construct the content generation model.

Next, in step S304, the model constructor 204 retrieves the one or more sets of package-specific intermediate layers 302n from the packages database 300 which correspond to the selected packages and then constructs a content generation model using the package-specific intermediate layers 302n as discussed above.

Next, in step S306 access permissions data is received which indicates which packages the system or user is permitted to use. Then, in step S308, the selected packages used to construct the content generation model are compared to the permitted packages identified in the access permissions data.

If all of the selected packages are permitted then, the process proceeds to step S310 where an unrestricted generation mode is be activated and the content generation model is used to generate content based on the received user prompt. The generated content may be displayed or otherwise distributed, e.g. to a user or website, without restriction.

However, if the selected packages comprise restricted packages which are not identified as permitted in the access permission data, then the process proceeds to step S312 where a restricted generation mode is activated, and the content generation model is used to generate content in the restricted generation mode. For example, an obscured version of the content may be generated whereby a low-resolution version of the content is generated, or a watermark is embedded in to the content. An alert may be generated indicating that the generated content includes restricted content. In some examples, when the selected packages contain a restricted package, the content generation model may be prevented from generating the content entirely.

When the selected packages include restricted packages, a user may then choose to enable access to the restricted packages, for example, by paying for the restricted packages. Alternatively, the user may choose to unselect the restricted packages so as to reconstruct the content generation model and generate content based on the prompt without input from the restricted packages.

In this way, the methods discussed herein provide a means for users to quickly and efficiently adjust the content of a training set which is used to inform a content generation model, without needing to retrain the model every time the training set is adjusted.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A computer-implemented method of generating content, the method comprising:
receiving, from a packages database, one or more sets of package-specific intermediate layers from one or more neural networks configured to generate content, each neural network having been trained using a respective set of training data,
constructing a content generation model by combining the package-specific intermediate layers from the one or more neural networks and connecting an output of the combined intermediate layers to one or more pretrained content generation layers, and
using the content generation model to generate content for displaying.

2. The computer-implemented method of claim 1 wherein a plurality of sets of package-specific intermediate layers from a plurality of neural networks configured to generate content are received from the packages database.

3. The computer-implemented method of claims 1 or 2 wherein the combining of the intermediate layers comprises concatenating outputs of the intermediate layers, and
constructing the content generation model comprises providing the concatenated outputs to the one or more pretrained content generation layers, the one or more pretrained content generation layers being derived from a pretrained neural network which is configured to generate content from concatenated outputs of intermediate layers.

4. The computer-implemented method of any preceding claim wherein constructing the content generation model further comprises:
receiving one or more layers of an initial neural network which configured to receive a prompt and generate content embedding data, and
connecting the one or more layers of the initial neural network to the combined package-specific intermediate layers so as to provide the content embedding data as inputs to the combined package-specific intermediate layers.

5. The computer-implemented method of any preceding claim further comprising:
receiving a package list comprising a selection of at least one set of package-specific intermediate layers in the packages database, and
receiving the package-specific intermediate layers from the packages database that are identified in the packages list.

6. The computer-implemented method of claim 5 wherein the package list is determined based on:
access permissions data associated with a user, and/or
territorial permissions associated with a location of the user.

7. The computer-implemented method of claim 5 wherein packages list is received from a user interface.

8. The computer-implemented method of claim 5 further comprising receiving a prompt for initialising the content generation model, and determining the packages list based on the prompt.

9. The computer-implemented method of claim 7 or claim 8 further comprising:
determining a generation mode for the content by comparing the packages list to access permissions data to determine if the packages in the packages list are available, the generation mode comprising:
a restricted generation mode when the packages in the packages list are not available, and
an unrestricted generation mode when the packages in the packages list are available.

10. The computer-implemented method of claim 9, further comprising editing the generated content when the determined generation mode is restricted.

11. The computer-implemented method of claim 10, wherein the generated content includes an image and editing the content comprises embedding a watermark in the image.

12. The computer-implemented method of claims 9 to 11 wherein, when the generation mode is restricted, the method comprises:
requesting a payment from a user, and
responsive to receiving a payment, changing the generation mode to unrestricted.

13. A computer-implemented method of constructing a packages database for use in any preceding claim, the packages database comprising one or more sets of package-specific intermediate layers from one or more package-specific neural networks configured to generate content, the method comprising:
receiving one or more sets of training data,
using each of the one or more sets of training data to train a respective package-specific neural network, each package-specific neural network being trained to receive a prompt and generate content,
extracting a set of one or more intermediate layers from each trained package-specific neural network, and
storing each set of intermediate layers in the packages database.

14. A computer-readable medium comprising instruction which, when executed by a computer, cause the computer to perform the computer-implemented method of any preceding claim.

15. A system for generating content, the system comprising:
a packages database comprising a plurality of sets of package-specific intermediate layers from a plurality of neural networks for generating content, each neural network having been trained using a respective set of training data,
a generative model constructor configured to construct a content-generation model for generating content by: receiving the package-specific intermediate layers from the packages database, combining the received package-specific intermediate layers, and connecting an output of the combined package-specific intermediate layers to one or more pretrained content generation layers, and
a content generator configured to use the content generation model to generate content.
